(19) Europäisches Patentamt / European Patent Office / Office européen des brevets

(11) **EP 2 559 981 B1**

(12) **EUROPÄISCHE PATENTSCHRIFT**

(45) Veröffentlichungstag und Bekanntmachung des Hinweises auf die Patenterteilung:
**12.09.2018   Patentblatt 2018/37**

(51) Int Cl.:
**G01K 1/02** (2006.01)     **G01K 7/16** (2006.01)
**G01R 27/02** (2006.01)     **G01R 27/08** (2006.01)
**G01R 27/14** (2006.01)

(21) Anmeldenummer: **12174783.6**

(22) Anmeldetag: **03.07.2012**

(54) **Widerstandsmessung, insbesondere Temperaturbestimmung anhand temperaturabhängiger Widerstände**

Resistance measurement, in particular temperature determination on the basis of temperature-dependent resistances

Mesure de résistance, notamment détermination de la température à l'aide de résistances sensibles à la température

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2011   DE 102011079098**

(43) Veröffentlichungstag der Anmeldung:
**20.02.2013   Patentblatt 2013/08**

(73) Patentinhaber: **BSH Hausgeräte GmbH**
**81739 München (DE)**

(72) Erfinder:
• **Bauer, Hans-Jürgen**
  **83278 Traunstein (DE)**
• **Nadler, Robert**
  **83308 Trostberg (DE)**
• **Roth, Eduard**
  **83301 Traunreut (DE)**

(56) Entgegenhaltungen:
**DE-T2- 69 300 966     DE-U1- 29 923 215**

**Beschreibung**

Die Erfindung betrifft einen Mehrkerntemperaturfühler nach Anspruch 1 sowie ein Verfahren zur Widerstandsbestimmung nach Anspruch 7.

Es sind Kerntemperaturfühler mit einem Temperaturwiderstand, sogenannte Einpunkt-Kerntemperaturfühler, bekannt. Der hierbei eingesetzte Widerstand ist temperaturabhängig. Üblicherweise wird hierfür ein Heißleiter (auch bezeichnet als NTC-Widerstand) verwendet. Ein solcher Heißleiter hat bei niedriger Temperatur einen hohen Widerstand und bei hoher Temperatur einen niedrigen Widerstand. Auch ist ein sogenannter Kaltleiter (auch bezeichnet als PTC-Widerstand) bekannt, der bei niedriger Temperatur einen geringeren Widerstand als bei hoher Temperatur aufweist.

Aus dem Widerstandswert des Heißleiters oder des Kaltleiters kann die Temperatur des Messfühlers bzw. des Messpunkts am Ort des Messfühlers ermittelt werden.

Der Einpunkt-Kerntemperaturfühler erfordert zur Messung des Temperaturwertes eine zweipolige Verbindung zu einer Messelektronik.

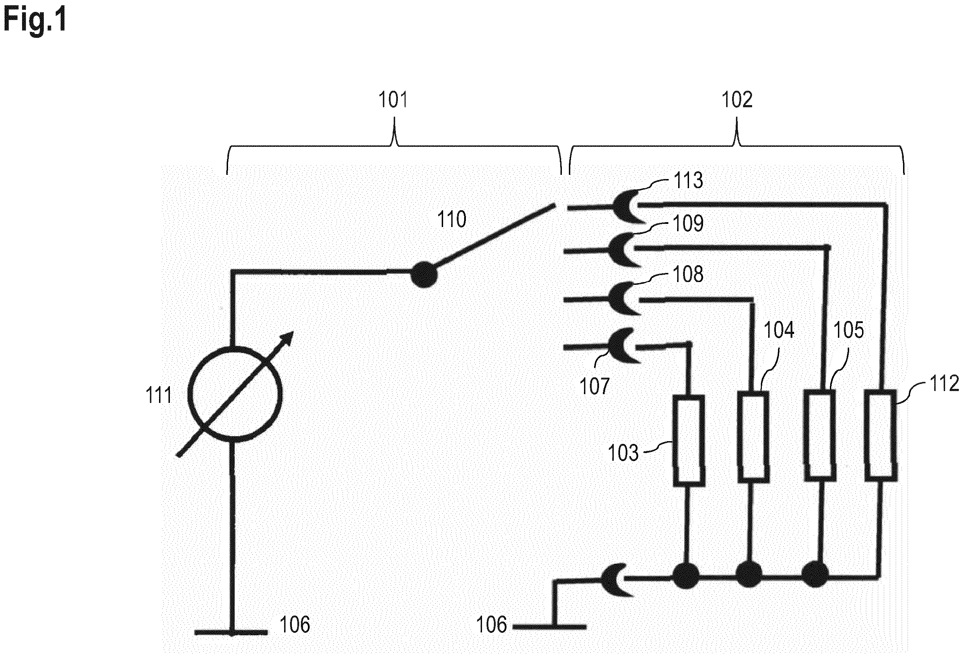

Ferner sind Mehrpunkt-Kerntemperaturfühler bekannt, die mehrere Messpunkte besitzen. **Fig.1** zeigt eine bekannte Schaltungsanordnung mit einer Messelektronik 101 und einem Vierpunkt-Kerntemperaturfühler 102, der über einen von vier Anschlüssen zeitweise mit der Messelektronik 101 verbunden ist. Der Vierpunkt-Kerntemperaturfühler 102 weist vier temperaturabhängige Widerstände 103, 104, 105 und 112 auf, die auf der einen Seite mit Massepotential 106 verbunden sind und jeweils auf der anderen Seite einen Anschluss 107, 108, 109 und 113 aufweisen. Somit wird zur Auswertung der vier Widerstände 103, 104, 105 und 112 eine fünfpolige Steckverbindung (umfassend die Anschlüsse 107, 108, 109 und 113 sowie Massepotential) benötigt.

Für die Messung der Widerstände 103, 104, 105 und 112 wird über einen Schalter 110 jeweils einer der Widerstände 103, 104, 105 und 112 mit einem Messwerk 111 verbunden und der jeweils verbundene Widerstand zwischen Massepotential 106 und dem kontaktierten Anschluss gemessen. Diese Schaltungsanordnung benötigt für einen Vierpunkt-Kerntemperaturfühler 102 eine fünfpolige Steckverbindung zu der Messelektronik 101.

Nachteilig bei dieser Schaltungsanordnung ist, dass ein aufwendiger fünfpoliger Stecker und eine aufwendige fünfpolige Buchse benötigt werden.

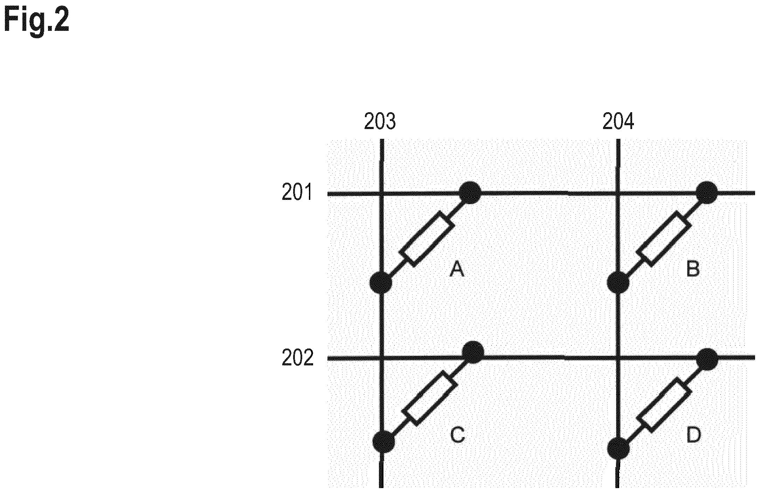

Fig.2 zeigt eine ebenfalls bekannte Matrix-Anordnung mit zwei Spalten und zwei Zeilen. Es sind vier Widerstände A bis D gezeigt, die über die Leitungen 201 bis 204 kontaktiert werden können: So kann der Widerstand A über die Leitungen 201 und 203, der Widerstand B über die Leitungen 201 und 204, der Widerstand C über die Leitungen 202 und 203 und der Widerstand D über die Leitungen 202 und 204 bestimmt werden.

Hierbei ist es von Nachteil, dass anhand der Matrix-Anordnung zur Messung von fünf Widerständen insgesamt fünf Leitungen benötigt werden, d.h. analog zu der Darstellung in Fig.2 zwei Spalten und drei Zeilen oder drei Spalten und zwei Zeilen.

DE 693 00 966 T2 offenbart einen Temperaturmesser zum Einstecken in ein zu erhitzendes Nahrungsmittel, wobei der Temperaturmesser die Form eines Stabes hat und an seiner Spitze und mindestens einer weiteren Position einen Temperatursensor trägt, deren Widerstand sich mit der Temperatur ändert, der über ein Kabel mit einem Anschluss nach Art eines Telefonsteckers verbunden ist, der über eine korrespondierende in dem Backofen angeordnete Buchse, die für die Wärmebehandlung vorgesehen ist, mit einer Steuereinrichtung zur Steuerung des Heizprozesses verbindbar ist, wobei drei Temperatursensoren vorgesehen sind, die an dem Temperaturmesser an geeigneten voneinander beabstandeten Positionen vorgesehen sind, der Anschluss drei Kontaktbereiche hat und die drei Temperatursensoren miteinander verbunden sind und einen Stern oder Dreieck mit dem drei Ausgängen bilden, die mit den jeweiligen Kontaktbereichen des Anschlusses verbunden sind. Dabei sind die drei Widerstände in Form einer Sternschaltung angeordnet.

Die **Aufgabe** der Erfindung besteht darin, den vorstehend genannten Nachteil zu vermeiden und insbesondere eine effiziente Möglichkeit zur Kontaktierung eines Mehrpunkt-Temperaturfühlers anzugeben.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Mehrkerntemperaturfühler mit fünf temperaturabhängigen Widerständen vorgeschlagen,

- bei dem je zwei Widerstände in Reihe geschaltet sind und die Mittenabgriffe der beiden Reihenschaltungen über einen fünften Widerstand miteinander verbunden sind,
- bei dem jedes Ende jeder Reihenschaltung über einen Anschluss mit einer Messelektronik kontaktierbar ist,
- wobei mittels elektronischer Schalter die fünf Widerstände über die Anschlüsse mit der Messelektronik verbindbar sind und
- anhand unterschiedlicher Messungen (insbesondere mittels unterschiedlicher Stellungen der elektronischen Schalter) mittels der Messelektronik die Widerstandswerte der Widerstände bestimmbar sind.

Bei den elektronischen Schaltern kann es sich um durch die Messelektronik aktivierbare und deaktivierbare Schalter oder Schaltfunktionen handeln. Beispielsweise können Transistoren oder Relais vorgesehen sein, die anhand der Messelektronik angesteuert werden. Beispielsweise kann die Messelektronik eine Prozessor- oder sonstige Verarbeitungseinheit aufweisen, die die elektronischen Schalter ansteuert und die Messwerte bestimmt, z.B. aufnimmt. Aus den Messwerten können dann die Widerstandswerte berechnet werden. Vorzugsweise sind die Widerstände, z.B. in Form eines Messfühlers, zusammen angeordnet und werden über die Anschlüsse, z.B. eine geeignete Buchse-Stecker-Verbindung, mit der Messelektronik verbunden. Die Messelektronik kann anhand der unterschiedlichen Stellungen der elektronischen Schalter zu verschiedenen Zeiten verschiedene Messungen durchführen, wobei jeweils eine bestimmte Kontaktierung der Widerstände aus der Stellung der elektronischen Schalter resultiert. Aus verschiedenen Kontaktierungen ergeben sich die unterschiedlichen Messungen, die zur Lösung eines Gleichungssystems mit dem Widerstandswerten der Widerstände verwendet werden können.

Die Messelektronik kann eine Verarbeitungseinheit, insbesondere eine Prozessoreinheit und/oder eine zumindest teilweise festverdrahtete oder logische Schaltungsanordnung sein. Die Messelektronik kann insbesondere jede Art von Prozessor oder Rechner oder Computer mit entsprechend notwendiger Peripherie (Speicher, Input/Output-Schnittstellen, Ein-Ausgabe-Geräte, etc.) sein oder umfassen.

Somit ist es möglich, eine kostengünstige Schaltungsanordnung für die Auswertung eines Mehrpunkt-Kerntemperaturfühlers vorzusehen. Die Kontaktierung bzw. unterschiedliche Beschaltung der mindestens vier Widerstände kann anhand der Anschlüsse z.B. mit einem vierpoligen Stecker und einer vierpoligen Buchse erfolgen, da gemäß dem hier vorliegenden Ansatz fünf Widerstände effizient mit vier Leitungen bestimmt werden können.

Eine andere Weiterbildung ist es, dass temperaturabhängigen Widerstände Heißleiter oder Kaltleiter sind.

Hierbei besteht vorteilhaft die Möglichkeit, die kleinste an einem der Widerstände auftretende Temperatur mit hoher Genauigkeit zu ermitteln.

Auch ist es eine Weiterbildung, dass die Messelektronik über die elektronischen Schalter die Anschlüsse so verbindet, dass die folgenden Messwiderstandswerte R12, R13, R23, R24 und R34 für die fünf Widerstände A, B, C, D und E ermittelbar sind:

$$R12 = A + B;$$

$$R13 = A + C + E;$$

$$R23 = B + C + E;$$

$$R24 = B + D + E;$$

$$R34 = C + D;$$

wobei basierend auf den Messwiderstandswerten R12, R13, R23, R24 und R34 die Widerstandswerte A, B, C, D und E wie folgt ermittelbar sind:

$$A = (R12 - R23 + R13) / 2;$$

$$B = (R23 - R13 + R12) / 2;$$

$$C = (R34 - R24 + R23) / 2;$$

$$D = (R34 + R24 - R23) / 2;$$

$$E = (R13 - R12 + R24 - R34) / 2.$$

Auch wird die vorstehend genannte Aufgabe gelöst mittels eines Hausgeräts, insbesondere Gargerät oder Ofen, mit einer Kontaktiermöglichkeit für den Mehrkerntemperaturfühler wie hierin beschrieben, wobei die Kontaktiermöglichkeit eine vierpolige Buchse oder einen vierpoligen Stecker umfasst.

Es ist eine Weiterbildung, dass das Hausgerät mit der Messelektronik ausgerüstet ist, mittels elektronischer Schalter die fünf Widerstände über die Anschlüsse mit der Messelektronik verbindbar sind, und anhand unterschiedlicher Messungen mittels der Messelektronik die Widerstandswerte der Widerstände bestimmbar sind.

Ferner wird die vorstehend genannte Aufgabe gelöst mittels eines Systems, aufweisend ein Hausgerät wie oben beschrieben und einen Mehrkerntemperaturfühler wie oben beschrieben, wobei die fünf Widerstände über eine vierpolige Buchse-Stecker-Verbindung mit der Messelektronik verbindbar sind.

Ferner wird die obige Aufgabe gelöst mittels eines Verfahrens zur Widerstandsbestimmung von fünf Widerständen, wobei je zwei Widerstände in Reihe geschaltet sind und die Mittenabgriffe der beiden Reihenschaltungen über einen fünften Widerstand miteinander verbunden sind,

- bei dem die fünf Widerstände über vier Anschlüsse mittels elektronischer Schalter einer Messelektronik elektrisch kontaktiert werden,
- bei dem anhand unterschiedlicher Messungen zu unterschiedlichen Zeitpunkten die Widerstandswerte der fünf Widerstände ermittelt werden.

Es ist eine Weiterbildung, dass die folgenden Messwiderstandswerte R12, R13, R23, R24 und R34 für die fünf Widerstände A, B, C, D und E ermittelt werden:

$$R12 = A + B;$$

$$R13 = A + C + E;$$

$$R23 = B + C + E;$$

$$R24 = B + D + E;$$

$$R34 = C + D;$$

und basierend auf den Messwiderstandswerten R12, R13, R23, R24 und R34 die Widerstandswerte A, B, C, D und E wie folgt ermittelbar sind:

$$A = (R12 - R23 + R13) / 2;$$

$$B = (R23 - R13 + R12) / 2;$$

$$C = (R34 - R24 + R23) / 2;$$

$$D = (R34 + R24 - R23) / 2;$$

$$E = (R13 - R12 + R24 - R34) / 2.$$

Eine Weiterbildung besteht darin, dass für die ermittelten Widerstandswerte zugehörige Temperaturwerte bestimmt werden.

Auch ist es eine Ausgestaltung, dass anhand der Temperaturwerte ein Gargerät gesteuert wird.

Das Verfahren kann beispielsweise in einer Elektronik oder Steuereinheit des Gargeräts implementiert sein.

Die vorstehenden Ausführungen zu den Vorrichtungen gelten für das hier erwähnte Verfahren entsprechend.

Die hierin vorgestellte Lösung umfasst ferner ein Computerprogrammprodukt, das direkt in einen Speicher eines digitalen Computers ladbar ist, umfassend Programmcodeteile die dazu geeignet sind, Schritte des hier beschriebenen Verfahrens durchzuführen.

Weiterhin wird das oben genannte Problem gelöst mittels eines computerlesbaren Speichermediums, z.B. eines beliebigen Speichers, umfassend von einem Computer ausführbare Anweisungen (z.B. in Form von Programmcode) die dazu geeignet sind, dass der Computer Schritte des hier beschriebenen Verfahrens durchführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.

Es zeigen:

Fig.3 eine nicht zu der Erfindung gehörige Anordnung mit vier temperaturabhängigen Widerständen A bis D, die über vier Anschlüsse mit einer Messelektronik verbindbar sind;

Fig.4 eine erfindungsgemäße Anordnung mit fünf temperaturabhängigen Widerständen A bis E, die über vier Anschlüsse mit einer Messelektronik verbindbar sind;

Fig.5 eine schematische Schaltung einer Messelektronik, anhand derer die Anordnungen gemäß Fig.3 und Fig.4 jeweils mittels (elektronischer) Schalter mit einem Messwerk verbunden werden können.

Es wird vorgeschlagen, anstatt einer fünfpoligen Verbindung mit einer vierpoligen Verbindung für den Anschluss eines Mehrpunkt-Temperaturfühlers (mit vier oder fünf Messpunkten) auszukommen. Durch den Einsatz eines vierpoligen anstatt eines fünfpoligen Steckers und einer entsprechenden Buchse ergeben sich deutliche Kostenvorteile, reduzierte Anforderungen an Toleranzen sowie geringere Anforderungen an den benötigten Bauraum.

Vier temperaturabhängige Widerstände:

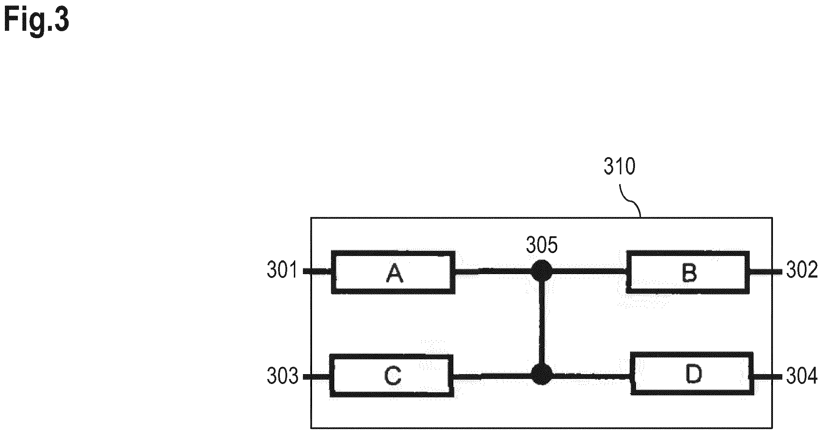

Fig.3 zeigt eine Anordnung 310 mit vier temperaturabhängigen Widerständen A bis D. Die Anordnung umfasst vier Anschlüsse 301 bis 304, die mit einer Messelektronik verbindbar sind. Der Widerstand A verbindet den Anschluss 301 mit einem Knoten 305, der Widerstand B verbindet den Anschluss 302 mit dem Knoten 305, der Widerstand C verbindet den Anschluss 303 mit dem Knoten 305 und der Widerstand D verbindet den Anschluss 304 mit dem Knoten 305.

Die Messelektronik (nicht in Fig.3 dargestellt) verbindet je zwei der Anschlüsse 301 bis 304, so dass nacheinander mehrere Messungen der temperaturabhängigen Widerstände A bis D durchgeführt werden können. Beispielsweise können die folgenden vier Messungen durchgeführt werden:

- Messung 1: Die Anschlüsse 301 und 303 werden mit der Messelektronik verbunden. Es wird ein Widerstand R13 gemessen, der einer Reihenschaltung aus den Widerständen A und C entspricht, d.h.

$$R13 = A + C.$$

- Messung 2: Die Anschlüsse 301 und 304 werden mit der Messelektronik verbunden. Es wird ein Widerstand R14 gemessen, der einer Reihenschaltung aus den Widerständen A und D entspricht, d.h.

$$R14 = A + D.$$

- Messung 3: Die Anschlüsse 302 und 303 werden mit der Messelektronik verbunden. Es wird ein Widerstand R23 gemessen, der einer Reihenschaltung aus den Widerständen B und C entspricht, d.h.

$$R23 = B + C.$$

- Messung 4: Die Anschlüsse 303 und 304 werden mit der Messelektronik verbunden. Es wird ein Widerstand R34 gemessen, der einer Reihenschaltung aus den Widerständen C und D entspricht, d.h.

$$R34 = C + D.$$

Die Messelektronik kann eine Verarbeitungseinheit (z.B. eine Auswerteelektronik, einen Prozessor, o.ä.) aufweisen, anhand derer aus den obigen Messungen die vier einzelnen Widerstände A bis D anhand er folgenden Beziehungen ermittelt werden können:

$$A = (R13 - R34 + R14) / 2$$

$$B = (2 * R23 - R13 - R34 + R14) / 2$$

$$C = (R13 + R34 - R14) / 2$$

$$D = (R34 - R13 + R14) / 2$$

Fünf temperaturabhängige Widerstände:

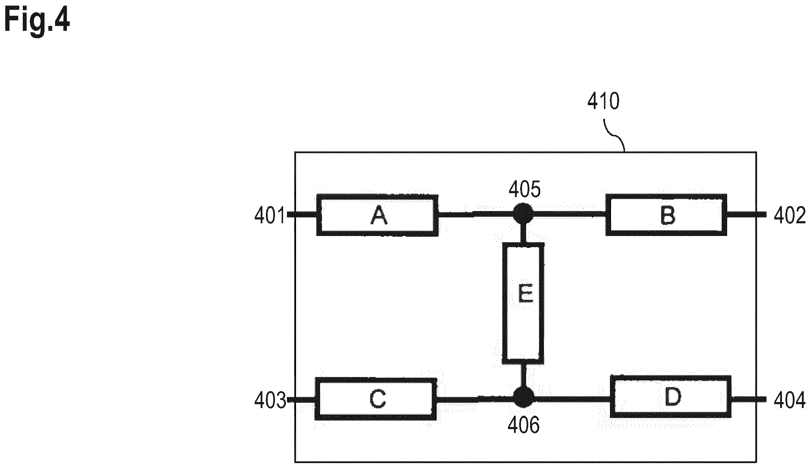

**Fig.4** zeigt eine Anordnung 410 mit fünf temperaturabhängigen Widerständen A bis E. Die Anordnung umfasst vier Anschlüsse 401 bis 404, die mit einer Messelektronik verbindbar sind. Der Widerstand A verbindet den Anschluss 401 mit einem Knoten 405, der Widerstand B verbindet den Anschluss 402 mit dem Knoten 405, der Widerstand C verbindet den Anschluss 403 mit einem Knoten 406 und der Widerstand D verbindet den Anschluss 404 mit dem Knoten 406. Ein Widerstand E verbindet den Knoten 405 mit dem Knoten 406.

Die Messelektronik (nicht in Fig.4 dargestellt) verbindet je zwei der Anschlüsse 401 bis 404, so dass nacheinander mehrere Messungen der temperaturabhängigen Widerstände A bis E durchgeführt werden können. Beispielsweise können die folgenden fünf Messungen durchgeführt werden:

- Messung 1: Die Anschlüsse 401 und 402 werden mit der Messelektronik verbunden. Es wird ein Widerstand R12 gemessen, der einer Reihenschaltung aus den Widerständen A und B entspricht, d.h.

$$R12 = A + B.$$

- Messung 2: Die Anschlüsse 401 und 403 werden mit der Messelektronik verbunden. Es wird ein Widerstand R13 gemessen, der einer Reihenschaltung aus den Widerständen A, E und C entspricht, d.h.

$$R13 = A + C + E.$$

- Messung 3: Die Anschlüsse 402 und 403 werden mit der Messelektronik verbunden. Es wird ein Widerstand R23 gemessen, der einer Reihenschaltung aus den Widerständen B, E und C entspricht, d.h.

$$R23 = B + C + E.$$

- Messung 4: Die Anschlüsse 402 und 404 werden mit der Messelektronik verbunden. Es wird ein Widerstand R24 gemessen, der einer Reihenschaltung aus den Widerständen B, E und D entspricht, d.h.

$$R24 = B + D + E.$$

- Messung 5: Die Anschlüsse 403 und 404 werden mit der Messelektronik verbunden. Es wird ein Widerstand R34 gemessen, der einer Reihenschaltung aus den Widerständen C und D entspricht, d.h.

$$R34 = C + D.$$

Die Messelektronik kann anhand der Verarbeitungseinheit aus den obigen Messungen die fünf einzelnen Widerstände A bis E anhand der folgenden Beziehungen ermitteln:

$$A = (R12 - R23 + R13) / 2$$

$$B = (R23 - R13 + R12) / 2$$

$$C = (R34 - R24 + R23) / 2$$

$$D = (R34 + R24 - R23) / 2$$

$$E = (R13 - R12 + R24 - R34) / 2$$

Ansteuerung bzw. Auswertung durch Messelektronik

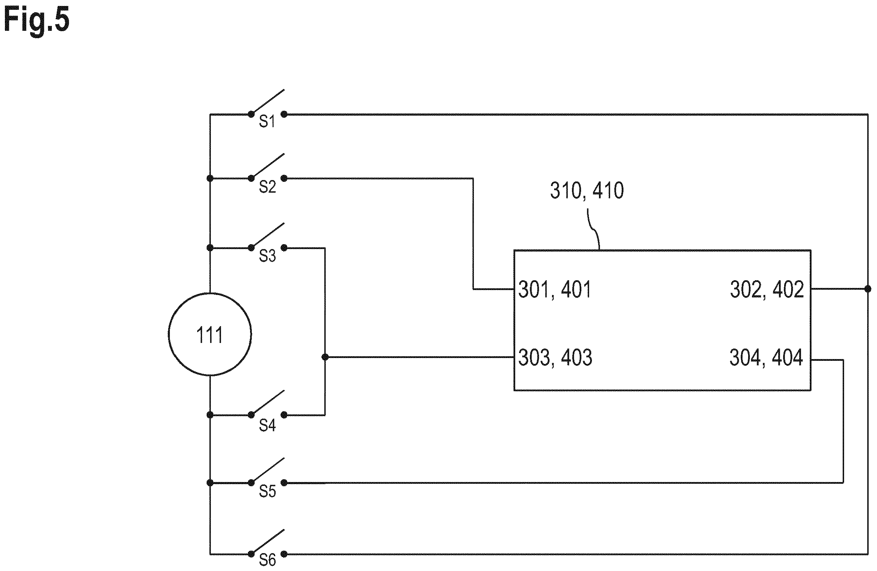

**Fig.5** zeigt eine schematische Schaltung einer Messelektronik, anhand derer die Anordnungen 310, 410 mittels Schaltern S1 bis S6 mit dem Messwerk 111 verbunden werden können. Bei den Schaltern handelt es sich beispielsweise um elektronische Schalter (z.B. Transistoren, Relais, Mosfets), die von der Messelektronik ansteuerbar sind. Dazu kann die Messelektronik z.B. einen Kontroller oder Prozessor aufweisen, der der Reihe nach, d.h. für die oben beschriebenen Messungen, die betroffenen Schalter schließt, die jeweilige Messung durchführt und danach andere Schalter schließt und die nächste Messung durchführt, etc.

So kann der Widerstand R12 gemessen werden, indem der Schalter S2 und der Schalter S6 geschlossen werden. Der Widerstand R13 kann gemessen werden, indem die Schalter S2 und S4 geschlossen werden. Der Widerstand R14 kann gemessen werden, indem die Schalter S2 und S5 geschlossen werden. Der Widerstand R23 kann gemessen werden, indem die Schalter S1 und S4 geschlossen werden. Der Widerstand R34 kann gemessen werden, indem die Schalter S3 und S5 geschlossen werden. Der Widerstand R24 kann gemessen werden, indem die Schalter S1 und S5 geschlossen werden.

Die anderen Schalter sind für die jeweilige Messung offen.

Hierbei sei angemerkt, dass ein Widerstand Rxy zwischen dem Anschluss x und dem Anschluss y gemessen wird, wobei folgende Zuordnung gilt:

- Anschlüsse 301, 401: x oder y = 1;
- Anschlüsse 302, 402: x oder y = 2;
- Anschlüsse 303, 403: x oder y = 3;
- Anschlüsse 304, 404: x oder y = 4.

Weitere Alternativen und Vorteile:

Bei den vorgestellten Lösungen werden vorzugsweise Serienschaltungen aus Widerständen ausgewertet. Diese Lösungsansätze sind daher vor allem von Vorteil zur Ermittlung einer niedrigsten Temperatur der temperaturabhängigen Widerstände.

Hierbei sei angemerkt, dass das vorliegende Konzept für jede Art der Widerstandsmessung anwendbar ist. Es ist nicht notwendig, dass die eingesetzten Widerstände in besonderem Maße temperaturabhängig sind (z.B. können herkömmliche ohmsche Widerstände anstelle von NTC- oder PTC-Widerständen eingesetzt werden).

Insbesondere ist es ein Vorteil, dass ein einfacherer und kostengünstiger vierpoliger Stecker für einen Vier- oder Fünfpunkt-Temperaturfühler eingesetzt werden kann. Dies reduziert den erforderlichen Bauraum und vermindert Toleranzprobleme bei SteckerBuchsen-Kombinationen, die eine geringere Anzahl von Polen aufweisen. Weiterhin werden Leitungen eingespart und es müssen weniger Leitungen kontaktiert werden.

**Bezugszeichenliste**

| | |
|---|---|
| 101 | Messelektronik |
| 102 | Mehrpunkt-Kerntemperaturfühler |
| 103 | temperaturabhängiger Widerstand |
| 104 | temperaturabhängiger Widerstand |
| 105 | temperaturabhängiger Widerstand |
| 112 | temperaturabhängiger Widerstand |
| 106 | Massepotential |
| 107 | Anschluss |
| 108 | Anschluss |
| 109 | Anschluss |
| 113 | Anschluss |
| 110 | Schalter |
| 111 | Messwerk |

| | |
|---|---|
| A | (temperaturabhängiger) Widerstand, z.B. PTC-Widerstand oder NTC-Widerstand |
| B | (temperaturabhängiger) Widerstand, z.B. PTC-Widerstand oder NTC-Widerstand |
| C | (temperaturabhängiger) Widerstand, z.B. PTC-Widerstand oder NTC-Widerstand |
| D | (temperaturabhängiger) Widerstand, z.B. PTC-Widerstand oder NTC-Widerstand |
| E | (temperaturabhängiger) Widerstand, z.B. PTC-Widerstand oder NTC-Widerstand |

| | |
|---|---|
| 201-204 | Leitung |
| 301 | Anschluss |
| 302 | Anschluss |
| 303 | Anschluss |
| 304 | Anschluss |
| 305 | Knoten |
| 310 | Anordnung umfassend vier Wiederstände |
| 401 | Anschluss |
| 402 | Anschluss |
| 403 | Anschluss |
| 404 | Anschluss |
| 405 | Knoten |
| 406 | Knoten |
| 410 | Anordnung umfassend fünf Wiederstände |
| S1-S6 | elektronische Schalter |

**Patentansprüche**

1. Mehrkerntemperaturfühler umfassend fünf temperaturabhängige Widerstände (A, B, C, D; E), wobei

   - je zwei Widerstände (A, B; C, D, E) in Reihe geschaltet sind und die Mittenabgriffe (305) der beiden Reihenschaltungen über einen fünften Widerstand (E) miteinander verbunden sind,
   - jedes Ende jeder Reihenschaltung (401-404) über einen Anschluss (401-404) mit einer Messelektronik kontaktierbar ist,
   - mittels elektronischer Schalter (S1-S6) die fünf Widerstände (A, B, C, D, E) über die Anschlüsse (401-404) mit der Messelektronik verbindbar sind und
   - anhand unterschiedlicher Messungen mittels der Messelektronik die Widerstandswerte der Widerstände (A, B; C, D, E) bestimmbar sind.

2. Mehrkerntemperaturfühler nach einem der vorhergehenden Ansprüche, wobei die temperaturabhängigen Widerstände (A, B, C, D; E) Heißleiter oder Kaltleiter sind.

3. Mehrkerntemperaturfühler nach einem der Ansprüche 1 oder 2, wobei die Messelektronik über die elektronischen Schalter die Anschlüsse so verbindbar sind, dass die folgenden Messwiderstandswerte R12, R13, R23, R24 und R34 für die vier Widerstände A, B, C, D und E ermittelbar sind:

$$R12 = A + B;$$

$$R13 = A + C + E;$$

$$R23 = B + C + E;$$

$$R24 = B + D + E;$$

$$R34 = C + D;$$

wobei basierend auf den Messwiderstandswerten R12, R13, R23, R24 und R34 die Widerstandswerte A, B, C, D und E wie folgt ermittelbar sind:

$$A = (R12 - R23 + R13) / 2;$$

$$B = (R23 - R13 + R12) / 2;$$

$$C = (R34 - R24 + R23) / 2;$$

$$D = (R34 + R24 - R23) / 2;$$

$$E = (R13 - R12 + R24 - R34) / 2.$$

4. System, aufweisend einen Mehrkerntemperaturfühler nach einem der Ansprüche 1 bis 3 und ein Hausgerät, insbesondere Gargerät oder Ofen, mit einer Kontaktiermöglichkeit für den Mehrkerntemperaturfühler nach einem der vorhergehenden Ansprüche, wobei

   - die Kontaktiermöglichkeit eine vierpolige Buchse oder einen vierpoligen Stecker umfasst.

5. System nach Anspruch 4, wobei

   - das Hausgerät mit der Messelektronik ausgerüstet ist,
   - mittels elektronischer Schalter (S1-S6) die fünf Widerstände (A, B, C, D, E) über die Anschlüsse (401-404) mit der Messelektronik verbindbar sind, und
   - anhand unterschiedlicher Messungen mittels der Messelektronik die Widerstandswerte der Widerstände (A, B, C, D) bestimmbar sind.

6. System nach Anspruch 4 oder 5, wobei die fünf Widerstände (A, B, C, D, E) über eine vierpolige Buchse-Stecker-Verbindung mit der Messelektronik verbindbar sind.

7. Verfahren zur Widerstandsbestimmung von fünf Widerständen (A, B, C, D, E), wobei

   - je zwei Widerstände (A, B, C, D) in Reihe geschaltet sind und die Mittenabgriffe (405, 406) der beiden Reihenschaltungen (A, B, C, D) über einen fünften Widerstand (E) miteinander verbunden sind,
   - die fünf Widerstände (A-E) über vier Anschlüsse (401-404) mittels elektronischer Schalter (S1-S6) einer Messelektronik elektrisch kontaktiert werden,
   - bei dem anhand unterschiedlicher Messungen zu unterschiedlichen Zeitpunkten die Widerstandswerte der fünf Widerstände (A-E) ermittelt werden.

8. Verfahren nach Anspruch 7, bei dem die folgenden Messwiderstandswerte R12, R13, R23, R24 und R34 für die fünf Widerstände A, B, C, D und E ermittelt werden:

$$R12 = A + B;$$

$$R13 = A + C + E;$$

$$R23 = B + C + E;$$

$$R24 = B + D + E;$$

$$R34 = C + D;$$

und basierend auf den Messwiderstandswerten R12, R13, R23, R24 und R34 die Widerstandswerte A, B, C, D und E wie folgt ermittelt werden:

$$A = (R12 - R23 + R13) / 2;$$

$$B = (R23 - R13 + R12) / 2;$$

$$C = (R34 - R24 + R23) / 2;$$

$$D = (R34 + R24 - R23) / 2;$$

$$E = (R13 - R12 + R24 - R34) / 2.$$

9. Verfahren nach einem der Ansprüche 7 oder 8, bei dem für die ermittelten Widerstandswerte zugehörige Temperaturwerte bestimmt werden.

10. Verfahren nach Anspruch 9, bei dem anhand der Temperaturwerte ein Gargerät gesteuert wird.

**Claims**

1. Multi-core temperature probe comprising five temperature-dependent resistors (A, B, C, D; E), wherein

- in each case, two resistors (A, B; C, D, E) are connected in series and the centre taps (305) of the two series connections are connected to one another via a fifth resistor (E),
- each end of each series connection (401-404) is contactable via a terminal (401-404) to a measuring electronics system,
- by means of electronic switches (S1-S6), the five resistors (A, B, C, D, E) are connectable via the terminals (401-404) to the measuring electronics system, and

- on the basis of different measurements, by means of the measuring electronics system, the resistance values of the resistors (A, B; C, D, E) are determinable.

2. Multi-core temperature probe according to one of the preceding claims, wherein the temperature-dependent resistors (A, B, C, D; E) are negative temperature coefficient thermistors or positive temperature coefficient thermistors.

3. Multi-core temperature probe according to one of claims 1 or 2, wherein the measuring electronics system is connectable to the terminals by means of the electronic switches such that the following measuring resistance values R12, R13, R23, R24 and R34 are determinable for the five resistors A, B, C, D and E:

$$R12 = A + B;$$

$$R13 = A + C + E;$$

$$R23 = B + C + E;$$

$$R24 = B + D + E;$$

$$R34 = C + D;$$

wherein, on the basis of the measuring resistance values R12, R13, R23, R24 and R34, the resistance values A, B, C, D and E are determinable as follows:

$$A = (R12 - R23 + R13) / 2;$$

$$B = (R23 - R13 + R12) / 2;$$

$$C = (R34 - R24 + R23) / 2;$$

$$D = (R34 + R24 - R23) / 2;$$

$$E = (R13 - R12 + R24 - R34) / 2.$$

4. System comprising a multi-core temperature probe according to one of claims 1 to 3 and a domestic appliance, in particular a cooking device or oven having a contacting capability for the multi-core temperature probe according to one of the preceding claims, wherein

- the contacting capability comprises a four-pole socket or a four-pole plug.

5. System according to claim 4, wherein

- the domestic appliance is equipped with the measuring electronics system,
- by means of electronic switches (S1-S6), the five resistors (A, B, C, D, E) are connectable by means of the terminals (401-404) to the measuring electronics system, and
- on the basis of different measurements, the resistance values of the resistors (A, B, C, D) are determinable by means of the measuring electronics system.

6. System according to claim 4 or 5, wherein the five resistors (A, B, C, D, E) are connectable via a four-pole socket-plug connection to the measuring electronics system.

7. Method for resistance determination of five resistors (A, B, C, D, E), wherein

- in each case, two resistors (A, B, C, D) are connected in series and the centre taps (405, 406) of the two series connections (A, B, C, D) are connected to one another via a fifth resistor (E),
- the five resistors (A-E) are electrically contacted via four terminals (401-404) by means of electronic switches (S1-S6) of a measuring electronics system,
- wherein on the basis of different measurements at different time points, the resistance values of the five resistors (A-E) are determined.

8. Method according to claim 7, wherein the following measuring resistance values R12, R13, R23, R24, R34 are determined for the five resistors A, B, C, D and E:

$$R12 = A + B;$$

$$R13 = A + C + E;$$

$$R23 = B + C + E;$$

$$R24 = B + D + E;$$

$$R34 = C + D;$$

and on the basis of the measuring resistor values R12, R13, R23, R24 and R34, the resistance values A, B, C, D and E are determined as follows:

$$A = (R12 - R23 + R13) / 2;$$

$$B = (R23 - R13 + R12) / 2;$$

$$C = (R34 - R24 + R23) / 2;$$

$$D = (R34 + R24 - R23) / 2;$$

$$E = (R13 - R12 + R24 - R34) / 2.$$

9. Method according to one of claims 7 or 8, wherein for the resistance values acquired, associated temperature values are determined.

10. Method according to claim 9, wherein on the basis of the temperature values, a cooking device is controlled.

**Revendications**

1. Sonde de température à plusieurs noyaux comprenant cinq résistances (A, B, C, D ; E) dépendant de la température,

- respectivement deux résistances (A, B, C, D, E) étant montées en série et les prises centrales (305) des deux circuits en série étant reliées entre elles par l'intermédiaire d'une cinquième résistance (E),
- chaque extrémité de chaque circuit en série (401 - 404) pouvant être mise en contact avec une électronique de mesure par l'intermédiaire d'une borne (401 - 404),
- les cinq résistances (A, B, C, D, E) pouvant être connectées avec l'électronique de mesure par l'intermédiaire des bornes (401 - 404) au moyen de commutateurs électroniques (S1 - S6), et
- les valeurs de résistance des résistances (A, B ; C, D, E) pouvant être déterminées au moyen de l'électronique de mesure à l'aide de différentes mesures.

2. Sonde de température à plusieurs noyaux selon la revendication précédente, les résistances dépendant de la température (A, B, C, D ; E) étant des thermistances CNT ou des thermistances CTP.

**3.** Sonde de température à plusieurs noyaux selon l'une quelconque des revendications 1 ou 2, l'électronique de mesure connectant les bornes par l'intermédiaire des commutateurs électroniques de manière à ce que les valeurs de résistance de mesure suivantes R12, R13, R23, R24 et R34 soient déterminables pour les quatre résistances A, B, C D, et E :

$$R12 = A + B ;$$

$$R13 = A + C + E ;$$

$$R23 = B + C + E ;$$

$$R24 = B + D + E ;$$

$$R34 = C + D ;$$

les valeurs de résistance A, B, C, D et E étant déterminables sur la base des valeurs de résistance de mesure R12, R13, R23, R24 et R34, comme suit :

$$A = (R12 - R23 + R13) / 2 ;$$

$$B = (R23 - R13 + R12) / 2 ;$$

$$C = (R34 - R24 + R23) / 2 ;$$

$$D = (R34 + R24 - R23) / 2 ;$$

$$E = (R13 - R12 + R24 - R34) / 2.$$

**4.** Système présentant une sonde de température à plusieurs noyaux selon l'une quelconque des revendications 1 à 3, et un
appareil ménager, notamment un appareil de cuisson ou four, comprenant une possibilité de mise en contact pour la sonde de température à plusieurs noyaux selon l'une quelconque des revendications précédentes,

- la possibilité de mise en contact comprenant une prise tétrapolaire ou un connecteur tétrapolaire.

**5.** Système selon la revendication 4,

- l'appareil ménager étant équipé de l'électronique de mesure,
- les cinq résistances (A, B, C, D, E) pouvant être raccordées à l'électronique de mesure par l'intermédiaire des bornes (401 - 404) au moyen de commutateurs électroniques (S1 - S6),
- les valeurs de résistance des résistances (A, B, C, D) pouvant être déterminées au moyen de l'électronique de mesure à l'aide de différentes mesures.

**6.** Système selon la revendication 4 ou 5,
les cinq résistances (A, B, C, D, E) pouvant être raccordées à l'électronique de mesure par l'intermédiaire d'une liaison prise/connecteur tétrapolaire.

**7.** Procédé de détermination de la résistance de cinq résistances (A, B, C, D, E),

- respectivement deux résistances (A, B, C, D) étant montées en série et les prises centrales (405, 406) des deux circuits en série (A, B, C, D) étant reliées entre elles par l'intermédiaire d'une cinquième résistance (E),
- les cinq résistances (A - E) pouvant être électriquement mises en contact par l'intermédiaire de quatre bornes (401 - 404) au moyen de commutateurs électronique (S1 - S6) d'une électronique de mesure,
- les valeurs de résistance des cinq résistances (A - E) étant déterminées à l'aide de différentes mesures à différents moments.

**8.** Procédé selon la revendication 7, dans lequel les valeurs de résistance de mesure suivantes R12, R13, R23, R24 et R34 sont déterminables pour les cinq résistances

$$A, B, C D, et E :$$

$$R12 = A + B ;$$

$$R13 = A + C + E ;$$

$$R23 = B + C + E ;$$

$$R24 = B + D + E ;$$

$$R34 = C + D ;$$

les valeurs de résistance A, B, C, D et E étant déterminées sur la base des valeurs de résistance de mesure R12, R13, R23, R24 et R34, comme suit :

$$A = (R12 - R23 + R13) / 2 \; ;$$

$$B = (R23 - R13 + R12) / 2 \; ;$$

$$C = (R34 - R24 + R23) / 2 \; ;$$

$$D = (R34 + R24 - R23) / 2 \; ;$$

$$E = (R13 - R12 + R24 - R34) / 2.$$

**9.** Procédé selon l'une quelconque des revendications 7 ou 8, dans lequel pour les valeurs de résistance déterminées, des valeurs de température correspondantes sont déterminées.

**10.** Procédé selon la revendication 9, dans lequel un appareil de cuisson est commandé à l'aide des valeurs de température.

# Fig.1

EP 2 559 981 B1

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69300966 T2